# EUROPEAN PATENT SPECIFICATION

(11) **EP 4 431 402 B1**
(45) Date of publication and mention of the grant of the patent: **29.10.2025**
(21) Application number: 23162261.4
(22) Date of filing: 16.03.2023
(51) Int. Cl.: B64F 5/10, F16B 7/04, F16B 19/02, F16B 19/10, F16B 5/02, F16B 5/04

(54) **POSITIONING AND REFERENCING DEVICE FOR CLAMPING PARTS**
POSITIONIER- UND REFERENZIERVORRICHTUNG FÜR SPANNTEILE
DISPOSITIF DE POSITIONNEMENT ET DE RÉFÉRENCEMENT POUR PIÈCES DE SERRAGE

(43) Date of publication of application: 18.09.2024
(73) Proprietor: Airbus Operations GmbH, 21129 Hamburg (DE)
(72) Inventor: Gorr, Eugen, 21129 Hamburg (DE); Jendrny, Jörg, 21129 Hamburg (DE)

(56) References cited:
- EP-A1- 2 698 596
- DE-B3- 102020 122 565
- US-A- 4 945 488
- US-B1- 6 230 382

## Description

The present disclosure generally relates to a method for mounting two structural parts to one another using a positioning device. Particularly, the present disclosure relates to a mounting method employing a positioning device having at least two reflectors and an identifier not located on a common straight line.

When two structural parts are to be mounted to one another, such as two primary structural parts of a vehicle (e.g., an aircraft, a bus, a train, etc.), the two structural parts are placed in the correct (overlapping) position and are temporarily clamped to one another. A fastening device can be moved to a first fastening position, where the fastening device can couple and mount the two structural parts to one another. Subsequently, the fastening device is moved to a second fastening position, and so on until fasteners are placed at all fastening positions.

A semi-automatic process can be employed, where the moving to the respective fastening position can be performed manually and the placing of the fasteners is performed automatically. Alternatively, a first fastener can be placed manually, in order to fixedly couple both primary structural parts, and the remaining fasteners are placed automatically.

However, the installation time of such a procedure is quite long. Moreover, if the starting (overlapping) position of the primary structural parts is not correct at the time of placing the first fastener, both parts will be mounted to one another in this incorrect position.

EP 2 698 596 A1 relates to a method for measuring local structures such as the inner wall of the cavity of an object, in particular for measuring a cylindrical boring of a workpiece making use of a mobile portable coordinate measuring machine (CMM). The CMM rests on a surface by standing means connected to a base by means of legs. The CMM further comprises a primary vertical member being movable to the base along a rotational axis by means of a drive mechanism. A stylus is attached to a secondary vertical member which is attached to the primary vertical member. Visible features are built in, so that they are identifiable by peripheral surveying means.

DE102020122565A relates to a method of aligning two parts one relative to another by use of an optical system.

It is therefore an object of the present disclosure to improve mounting two structural parts to one another, while increasing precision and efficiency of the fastening.

This object is solved by the present invention as defined in the independent claim. Preferred embodiments are defined by the dependent claims.

According to a first aspect to better understand the present disclosure, but not reflecting the claimed invention, a positioning device comprises a plate forming a main body of the positioning device having a first side and a second side opposite to the first side. The plate, or at least one of the first and second side, can be planar. Alternatively, the plate, or at least one of the first and second side, can be curved. In any case, the plate can be shaped to fit onto a surface of one of the first and second structural parts.

The positioning device further comprises a guiding pin mounted to the plate and extending perpendicularly from the first side of the plate, and an expandable pin mounted to the plate, wherein an expandable portion of the expandable pin extends perpendicularly from the first side of the plate. Thus, the guiding pin and the expandable pin are provided on the same side of the plate and constitute a guiding and mounting assembly for the positioning device.

Furthermore, the positioning device comprises at least two reflectors, and an identifier. The at least two reflectors and the identifier are not located on a common straight line. In other words, the at least two reflectors and the identifier can each be arranged at a corner of a polygon. For instance, in case of two reflectors and the identifier, the three items form a triangle. Since the items are not arranged on one straight line, at least a two-dimensional orientation of the positioning device can be determined when looking at the at least two reflectors and the identifier.

As a mere example, if the positioning device is mounted to a structural part, where the plate touches or abuts against a surface of the structural part, while the guiding pin and the expandable pin penetrate the structural part, the at least two reflectors and the identifier allow determining a spatial position and orientation of the structural part. This can be employed, for example, during fastening the structural part to another component, as the position and orientation of the structural part can be determined.

According to an example, the at least two reflectors are all arranged on the second side of the plate. This allows detecting all reflectors from one side of the plate, i.e. from one side of the structural part, to which the positioning device can be mounted.

Alternatively, one reflector of the at least two reflectors is arranged at a free end of the guiding pin arranged on the first side of the plate, and the remaining reflectors of the at least two reflectors are arranged on the second side of the plate. This allows the (first) one reflector on the first side of the plate to be detected on a side of the structural part opposite to a side where the positioning device is mounted. As a mere example, the position and orientation of the positioning device, and hence of the structural part, can be determined when viewing at the structural part and the positioning device from a location close to a plane defined by the plate.

In another example, the positioning device can further comprise a clamp mounted to the second side of the plate. Such clamp can be used to hold or fix another structural part to the positioning device and, hence, to the (first) structural part at which the positioning device is mounted. Thus, the positioning device does not only allow determination of the position and orientation of the (first) structural part. The positioning device also allows coupling both structural parts to one another in a predefined position and orientation. For example, both structural parts may be positioned and oriented with respect to one another, so that they can be fastened to one another.

In yet another example, the clamp can comprise a free end extending over an edge of the plate. This allows placing the other structural part onto the same side or surface of the (first) structural part, on which the positioning device is mounted. The clamp can then be used to hold and temporarily fix the other structural part, for example, in a position for fastening.

In a further example, the clamp can comprise a slot configured to move the clamp rotationally and linearly. This allows positioning the clamp, for example its free end, with respect to the other structural part. The holding capability of the positioning device can, hence, be optimised.

In another example, the positioning device can further comprise at least one guidance face protruding from the plate. Such guidance face can protrude from the plate at a position corresponding to a section or portion of the structural device, to which the positioning device can be mounted. The positioning device can therefore be positioned on the structural device in a very precise manner, since more contacting points or areas between the positioning devices and the structural part are provided.

Alternatively or additionally, the guidance face can protrude from the plate at a position corresponding to a section or portion of another structural device. If the guidance face is in contact with another structural part, the relative position between both structural parts can be more precise, which improves fastening of both structural parts to one another.

In another example, the identifier can include a reflecting portion and/or a machine-readable code. The identifier can also be used for determining a position and orientation of the positioning device, since the identifier marks a predefined position on the positioning device. This may be facilitated by the reflecting portion of the identifier. For instance, the reflecting portion may be determined in the same manner as the at least two reflectors, so that all three items look similar.

The machine-readable code can be any code that allows mapping the code to an unambiguous number or character combination. As mere examples, the machine-readable code can be or include a barcode, QR code, unique image, unique colour or the like. Thus, simultaneously with identifying the at least two reflectors and the identifier, the positioning device can be identified. This further allows identifying a group of positioning devices having all the same identifier, or identifying each individual positioning device out of the group of positioning devices, where each positioning device has its unique identifier. As a mere example, based on the identification the position of fasteners at the structural part(s) can be determined. Thus the positioning device can be matched to the structural parts.

According to a second aspect reflecting the claimed invention, a method for mounting two structural parts to one another comprises providing a pair of fixation holes into a first structural part, and mounting a positioning device according to the first aspect to the first structural part. The pair of fixation holes are provided at respective predefined positions on the first structural part. For instance, the positions of the fixation holes are predefined, such as relative to an end or edge or the like of the first structural part. Thus, the position of any device mounted to such fixation hole can be determined relative to the shape of the first structural part or any other referenced location on the first structural part.

The fixation holes can be provided by machining, drilling or eroding the material of the first structural part. Alternatively, the fixation holes may already be provided when manufacturing the first structural part. For example, the first structural part may be moulded. Two protrusions in the mould can then form the pair of fixation holes.

The positioning device is mounted to the first structural part by inserting the guiding pin into a first hole of the pair of fixation holes, inserting the expandable pin into a second hole of the pair of fixation holes, and expanding the expandable portion of the expandable pin. Thus, the plate of the positioning device is coupled and fixed (mounted) to the first structural part in a predefined position and orientation. The positioning device can, hence, also be referred to as a referencing tool or device. The more precise the fixation holes are made, the more precise is the predefined location and orientation of the positioning device relative to the first structural device.

The method further comprises positioning a second structural part relative to the first structural part, capturing an image of the positioning device including the at least two reflectors and the identifier, and arranging a fastening device relative to an intersection between the first and second structural parts based on a location of the at least two reflectors and the identifier captured in the image. Since the location of the at least two reflectors and the identifier captured in the image and the location of the pair of fixation holes is known, this altogether identifies the position and orientation of the positioning device. Thus, the position and orientation of the first structural part can be determined based on the location of the at least two reflectors and the identifier captured in the image. Furthermore, the respective shape of the first and second structural parts can also be predefined, so that the fastening device can be precisely arranged (positioned) relative to the first and second structural parts.

The intersection between the first and second structural parts includes an area, where the first and second structural parts overlap. For instance, the first and second structural parts may each have an area that abuts against each other and forms an area where fastening positions for fasteners can be predefined.

The method can further comprise fastening the first and second structural parts to one another by the fastening device. The positioning device mounted to the first structural part facilitates a precise arranging and positioning of the fastening device, i.e. facilitates a precise locating of a fastening position at the first and second structural parts.

Thus, a precise fastening of the first and second structural parts is possible. It is additionally possible to automate this fastening process, as camera images can be evaluated by an automatic fastening device, in order to determine the position and orientation of the positioning device and the structural parts. Thus, once the structural parts are brought into the correct position, an automatic fastening device can operate solely based on images of the reflectors and identifier of the positioning device.

In an implementation variant, said capturing an image can comprise capturing a first image of the positioning device with a first camera and a second image of the positioning device with a second camera. The position of the first camera and the second camera with respect to one another and/or with respect to the fastening device can be predefined. Thus, the position and orientation of the positioning device and, hence, the first and second structural parts in a three-dimensional space can be determined using triangulation.

In a further implementation variant, said positioning the second structural part can comprise clamping the second structural part to the first structural part using a clamp of the positioning device. Thus, the positioning device, the position and orientation of which is known or at least determinable, further allows positioning the second structural part relative to the first structural part in a (also determinable) position and orientation.

In yet a further implementation variant, said mounting the positioning device can comprise inserting the guiding pin through the first hole of the pair of fixation holes to such an extent that a first reflector arranged at one end of the guiding pin and a second reflector arranged at the other end of the guiding pin each extend over a side surface of the first and second structural parts. As a mere example, the first and/or second structural part may have a certain thickness in a direction along which the guiding pin extends. This thickness of the first and/or second structural part is smaller than a length of the guiding pin or a distance between the first and second reflector.

The fastening device can for example be a fastening clamp (a U-shaped device) that moves over the first and second structural parts, so that the ends of the fastening clamp are arranged at each of the side surfaces of the first and second structural parts. In this position, a camera can capture an image of the first and second reflector respectively arranged on the sides of the ends of the fastening clamp, so that the position and orientation of the positioning device is determinable from the camera perspective.

In another implementation variant, said fastening the first and second structural parts can comprise placing a plurality of self-piercing fasteners through the first and second structural parts. Such self-piercing fasteners allow a fast fastening of the first and second structural parts, as no through holes have to be formed first.

Moreover, even if more than two structural parts are fastens to one another, this can be achieved by this method, including self-piercing fasteners.

In yet another implementation variant, said fastening device can be moved by a robot arm. The robot arm can further be controlled based on an image captured by one or more cameras looking at the positioning device.

In the following, the present disclosure will further be described with reference to exemplary implementations illustrated in the figures, in which:
- Figure 1: schematically illustrates two structural parts that are to be mounted to one another with a coupling, using positioning devices and a fastening device;
- Figure 2: schematically illustrates two structural parts that are to be mounted to one another, using a positioning device;
- Figure 3: schematically illustrates an exemplary positioning device relative to a structural part;
- Figure 4: schematically illustrates a different perspective of the positioning device of Figure 3;
- Figure 5: schematically illustrates another exemplary positioning device;
- Figure 6: schematically illustrates a different perspective of the positioning device of Figure 5 and relative to a structural part;
- Figure 7: schematically illustrates a further exemplary positioning device; and
- Figure 8: schematically illustrates a different perspective of the positioning device of Figure 7.

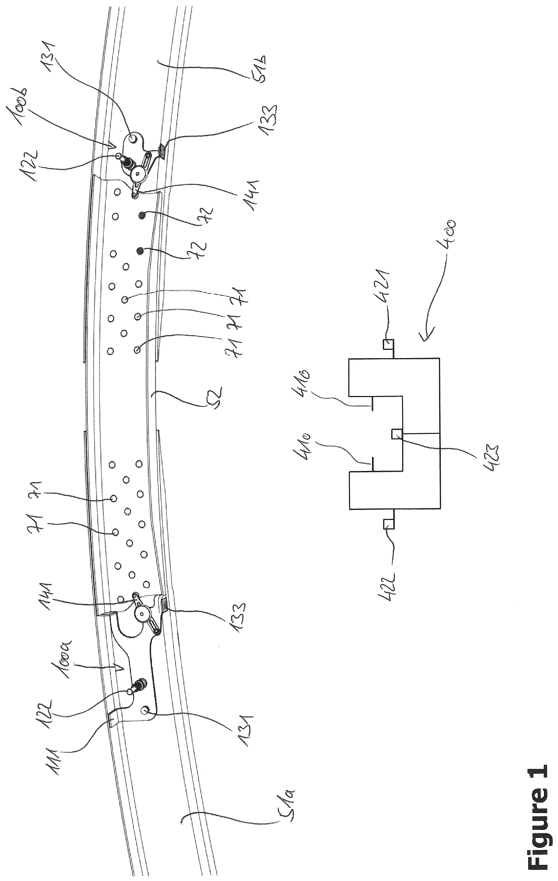

In the following description, for purposes of explanation and not limitation, specific details are set forth in order to provide a thorough understanding of the present disclosure. It will be apparent to one skilled in the art that the present disclosure may be practiced in other implementations that depart from these specific details. Figure 1 schematically illustrates two structural parts 51a and 51b that are to be mounted to one another with a coupling 52, using positioning devices 100a and 100b, and a fastening device 400. The two structural parts 51a,b can either overlap one another, or are coupled to one another, as illustrated, via a coupling 52, which overlaps a respective area of the structural parts 51a,b. In any case, in an overlap area, a plurality of fastening positions 71 are predefined. At each of these fastening positions 71 a fastener 72 is to be placed, such as a rivet, a screw, self-piercing fastener, a bolt or the like. Each of the fasteners 72 penetrates the first structural part 51 and the overlapping part 52, in order to bind and fix both parts 51, 52 to one another. This can additionally be supported by (automatically) drilling a through hole at each fastening position 71, or having an "unclosed" rivet already placed at each fastening position 71 that can then be closed to fasten the two structural parts 51a,b to one another.

The fastening device 400 can be a U-shaped device, such as a clamp, having a fastener placing device 410 at each free end of the U-shaped clamp. As a mere example, the fastener placing device 410 can be implemented as a riveting device that provides a rivet or a self-piercing fastener 72 through the two structural parts 51, 52 to be coupled to one another. Each free end of the fastening device 400 is to be placed on one of the opposite sides of one of the fastening positions 71 (in Figure 1 only one side is visible). The fastener placing device 410 can then operate from both sides of the two structural parts 51, 52.

In conventional fastening techniques, the structural parts 51, 52 have to be hold or clamped to one another. Thereafter, a first fastener 72 has to be provided, so that the two parts 51, 52 are fixed. Then further fasteners 72 can be provided at other fastening positions 71.

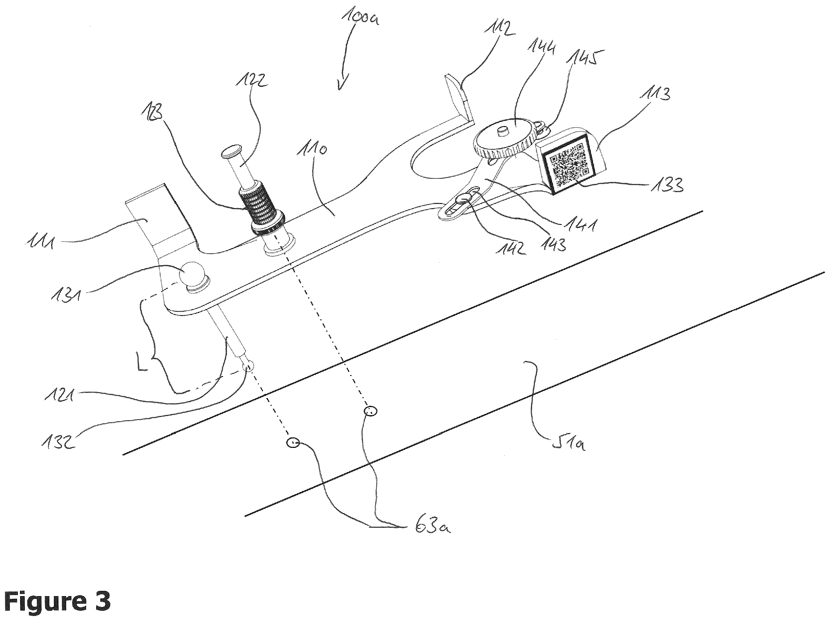

In order to increase efficiency and precision of the fastening of the structural parts 51, 52, a positioning device 100a,b is provided for each pair of structural parts 51, 52. Figure 1 illustrates a first positioning device 100a that is mounted to a first structural part 51a, and a second positioning device 100b that is mounted to a second structural part 51b. The details of the positioning devices 100a,b are explained with respect to Figures 3 to 6.

Both positioning devices 100a,b are mounted to a predefined position at/on the respective structural part 51a,b. Thus, the location and orientation of both positioning devices 100a,b can be determined, which further allows determining the location and orientation of the respective structural parts 51a,b.

Moreover, the positioning devices 100a,b are each provided with a clamp 141 (see Figures 3 to 6). This clamp 141 can press the coupling 52 onto the respective structural part 51a,b. Thus, the coupling 52 can be hold and fixed by only one device, i.e. the positioning device 100, before the coupling 52 is fastened to the structural part 51.

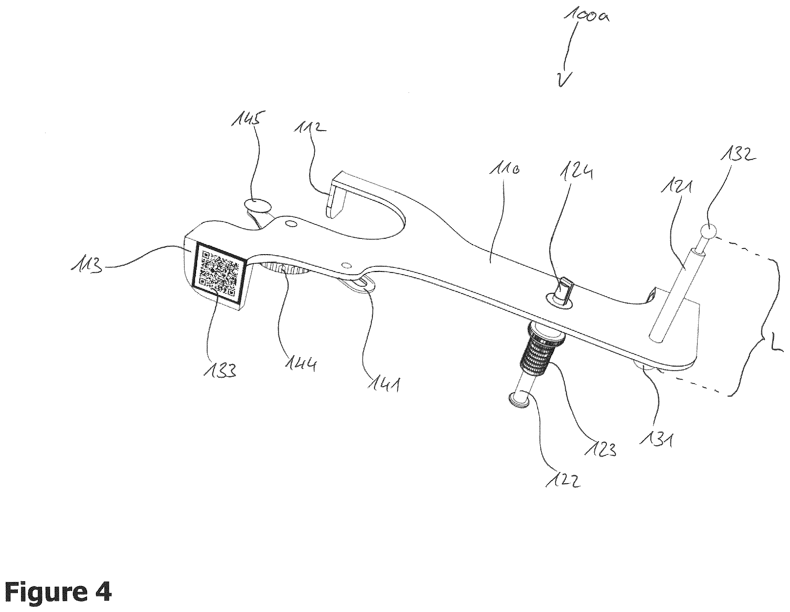

The first positioning device 100a (to the left in Figure 1) additionally comprises at least one guidance face 111, 112, 113 (see Figures 3 and 4), which allows abutting the coupling 52 against it. Thus, the coupling 52 can be oriented with respect to the positioning device 100a and, hence, with respect to the structural part 51a.

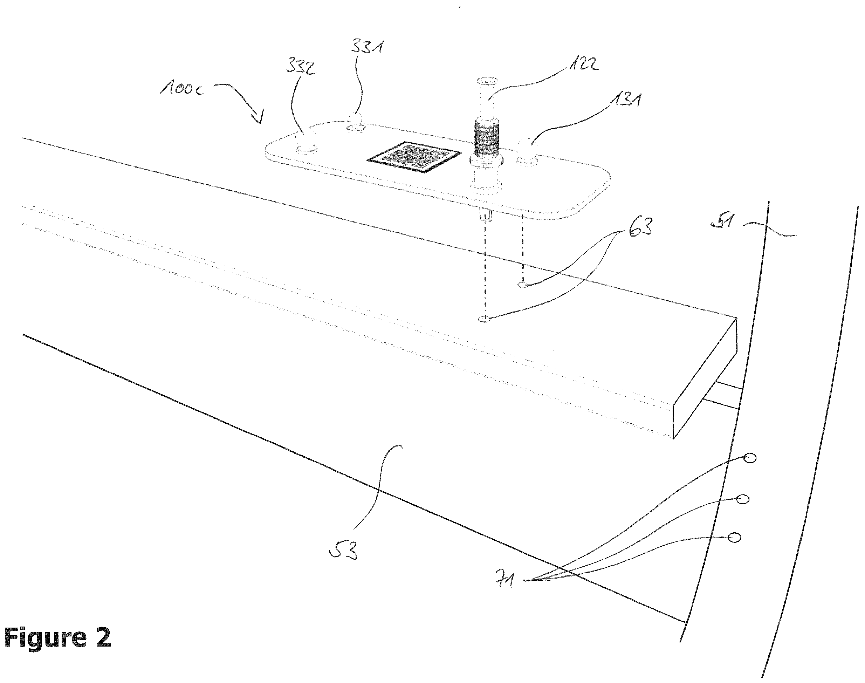

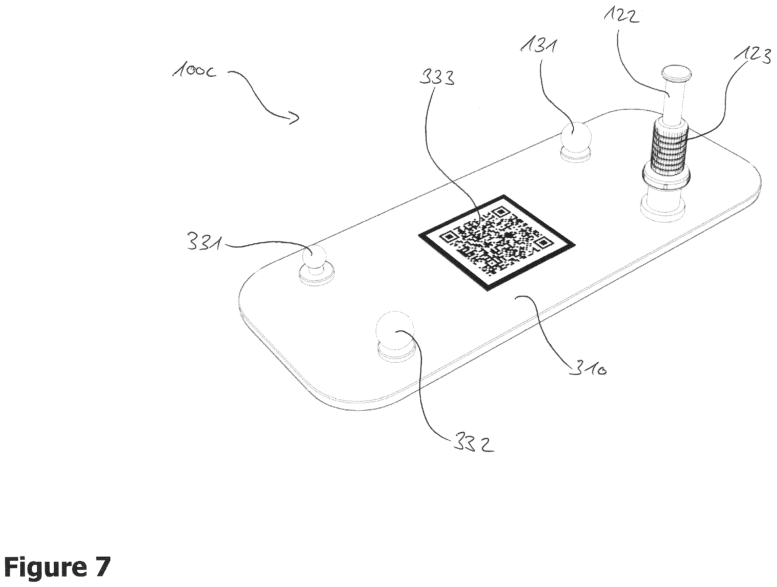

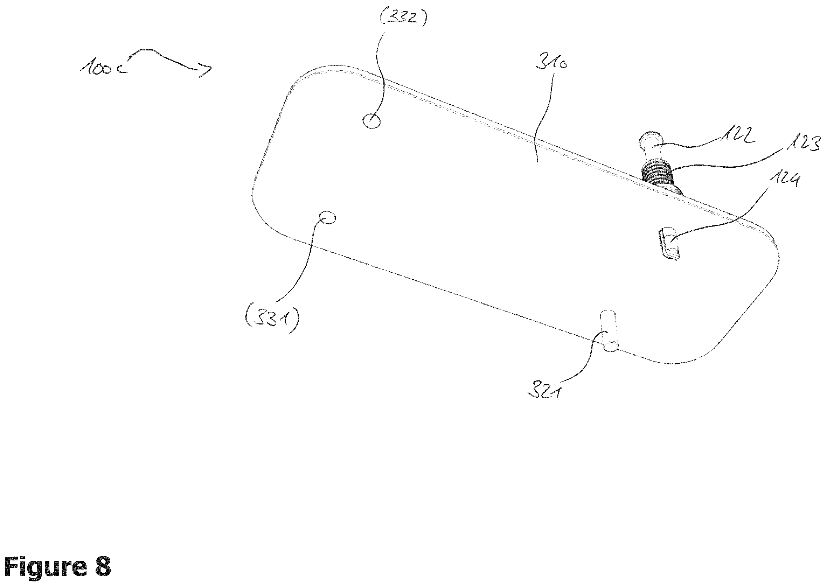

Figure 2 schematically illustrates two structural parts 51, 53 that are to be mounted to one another, using a positioning device 100c. The positioning device 100c is mounted to one of the two structural parts, here a crossbeam 53. The details of the positioning device 100c are illustrated in and explained with respect to Figures 7 and 8.

As indicated above, Figure 3 schematically illustrates a positioning device 100a relative to a structural part 51. Figure 4 schematically illustrates a different perspective of the positioning device 100a. The structural part 51 (not illustrated in Figure 4) is provided with a pair of fixation holes 63, which can be, for example, through holes. Such fixation holes 63 can be made with high precision, particularly with respect to diameter and relative position to one another as well as relative position to a particular edge, corner and/or side face of the structural part 51. Thus, the pair of fixation holes 63 allows determining a position and an orientation of the structural part 51 in a three-dimensional space and, hence, the corresponding position and orientation of the edge, corner and/or side face of the structural part 51.

The positioning device 100a comprises a plate 110 that forms the main body of the positioning device 100. The plate 110 has a first side (visible in Figure 4) and a second side (visible in Figure 3) opposite to the first side. A guiding pin 121 is mounted to the plate 110 and extends perpendicularly from the first side of the plate 110. The guiding pin 121 has a length L the major part of which extends from the first side.

The positioning device 100 further comprises an expandable pin 122 mounted to the plate 110 and having an expandable portion 124 that also extends perpendicularly from the first side of the plate 110. The relative position of the expandable pin 122 to the guiding pin 121 is predefined and should be made with high precision. Furthermore, the relative position of the expandable pin 122 and the guiding pin 121 corresponds to the relative position of the pair of fixation holes 63 in the structural part 51.

Thus, the guiding pin 121 can be inserted into a first hole of the pair of fixation holes 63, and the expandable pin 122 can be inserted into a second hole of the pair of fixation holes 63 (simultaneously). The expandable portion 124 of the expandable pin 122 can be expanded, for example when the expandable portion 124 is arranged inside the associated fixation hole 63 or on the first side of the plate 110. The expanding of the expandable portion 124 can be achieved, for example, by rotating an associated mechanic 123, such as a screw or threaded bolt. This task can be performed by a tool (not illustrated) used by a person or robot (not illustrated).

In any case, the expandable portion 124 fixes the plate 110 to a surface of the structural part 51. The expandable portion 124 can be configured to pull the plate 110 onto the surface of the structural part 51. In any case, the positioning device 100 is now mounted to the structural part 51 in a predefined position due to the predefined location of the fixation holes 63 (see Figures 1 and 3).

Furthermore, the positioning device 100a comprises at least two reflectors 131, 132. As a mere example, the two reflectors 131, 132 are respectively arranged at opposite ends of the guiding pin 121. Thus, when the positioning device 100a is mounted to the structural part 51, each reflector 131, 132 is located on opposite sides of the structural part 51. With reference to Figure 1, the reflector 131 is visible on the side where the positioning device 100a is mounted, while the other reflector 132 is visible on the opposite side. For instance, a camera 421, 422, 423 can capture an image of the positioning device 100 including the at least two reflectors 131, 132.

In Figure 1 three optional cameras 421, 422, 423 are illustrated as forming part of the fastening device 400. It is to be understood that this is only one of a plurality of possible arrangements for the camera(s) 421, 422, 423. For instance, one or more of the camera(s) 421, 422, 423 can also be arranged at a robot arm or the like.

According to a further example, a camera 423 may capture an image from an underside of the structural part 51a (i.e., the camera 423 has a viewing direction from the bottom to the top in Figure 1). It is further assumed that the length L of the guiding pin 121 is longer than the thickness of the structural part 51a. In this case, the camera 423 captures the first reflector 131 on a right-hand side of the structural part 51a, and the second reflector 132 on the left-hand side of the structural part 51a. Thus, when arranging the fastening device 400 at one of the fastening positions 71, the position and orientation of the positioning device 100a and, hence, of the structural part 51a, can be determined from the captured image. Therefore, a precise positioning of the fastener placing device 410 with respect to the fastening positions 71 can be achieved.

The positioning device 100a further comprises an identifier 133, which is located offside of the straight line connecting the two reflectors 131, 132. Thus, a triangle of predefined positions can be captured by a camera, which facilitates determination of the position and orientation of the positioning device 100a and, hence, of the structural part 51a. The identifier 133 may include a machine-readable code, such as a barcode, QR code, unique image, unique colour or the like. Alternatively or additionally, the identifier 133 may include a reflector, for example, having the same reflecting capabilities as the first and second reflectors 131, 132.

Furthermore, the positioning device 100a comprises at least one guidance face 111, 112, 113 protruding from the plate 110. Protruding from the plate 110 can mean extending away from the plate 110 at any desired angle, so that the respective guidance face 111, 112, 113 extends away from a plane defined by the plate 110. Each guidance face 111, 112, 113 can be positioned on the positioning device 100a, so that it has a particular relative position to the guiding pin 121 and the expandable pin 122, such as a predefined relative position.

One guidance face 113 can be used as locating the identifier 133. For instance, if the guidance face 113 faces a direction where a camera will capture an image of the first and second reflectors 131, 132, then the identifier 133 is also visible for the camera.

Furthermore, each guidance face 111, 112, 113 can be arranged and employed to contact or abut against a portion of one or more of the structural parts 51, 52. Again with reference to Figure 1, a guidance face 111 may abut against a flange of the structural part 51a. Another guidance face 112 may abut against the flange of the structural part 51a and may further abut against a side/front face of the coupling 52. Likewise, another guidance face 113 may abut against the side/front face of the coupling 52 (preferably at a different position than the other guidance face 112).

Thus, the positioning device 100 does not only allow to be mounted to the structural part 51 in a predefined position. The positioning device 100 further allows positioning the coupling 52 including transferring any forces from the coupling 52 to the structural part 51 via the guidance faces 111, 112, 113 (as well as the plate 110, the guiding pin 121 and the expandable pin 122).

The positioning device 100a can be specifically shaped for the coupling 52. Since a plurality of structural parts, for example in a vehicle, can have the same form and shape, the same positioning devices 100 can be used. It is to be understood that the positioning device 100 can have any form and shape, in order to facilitate positioning, orienting and fastening two structural parts 51, 52, 53 to one another.

Moreover, the positioning device 100 can include a clamp 141 mounted to the second side of the plate 110. The clamp 141 can comprise a slot 143, through which a button 142 runs, to connect the clamp 141 to the plate 110. The slot 143 allows a rotational and linear movement of the clamp 141 with respect to the plate 110. A free end 145 of the clamp 141 (preferably opposite to the end where the slot 143 is arranged) can be arranged, so that it extends over an edge of the plate 110. This free end 145 can be provided in a position overlapping the coupling 52 or another structural part 51, 53. Using a clamping fixture 144, the free end 145 can be pressed onto the coupling 52 or other structural part 51, 53. The clamping fixture 144, for example, can be a screw or threaded bolt. Thus, the clamp 141 can fix the coupling 52 or other structural part 51, 53 to the structural part 51a, on which the positioning device 100a is mounted.

When the first and second structural parts 51, 52 are coupled and fixed to one another in the correct position, the image of the positioning device 100 including the at least two reflectors 131, 132 and the identifier 133 can be captured, and the fastening device 400 can be arranged relative to an intersection/overlap between the first and second structural parts 51, 52 based on a location of the at least two reflectors 131, 132 and the identifier 133 captured in the image. Then the first and second structural parts 51, 52 can be fastened to one another by the fastening device 400, for example, by placing a plurality of fasteners 72 through the first and second structural parts. Such fasteners 72 can be self-piercing fasteners, rivets, screws or the like. The fastening device 400 can be controlled by a robot (robot arm), so that an automated fastening of the structural parts 51, 52 can be implemented.

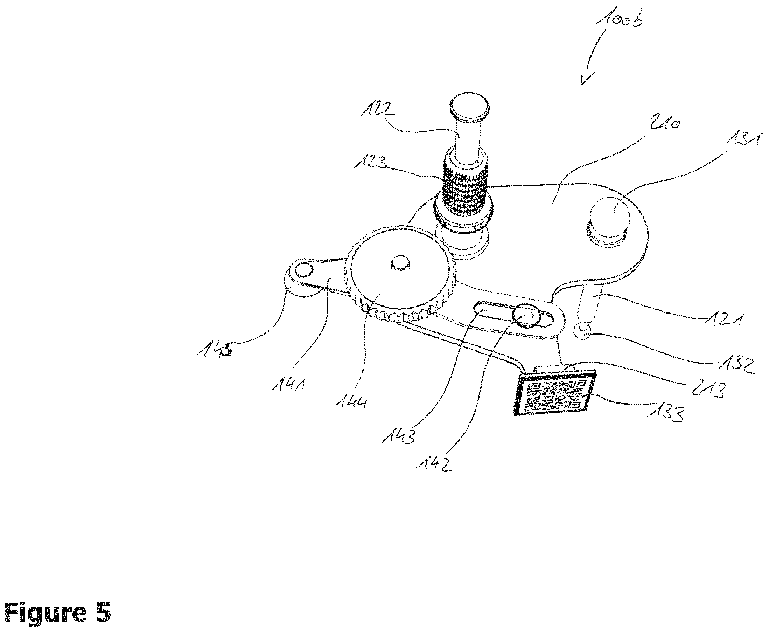

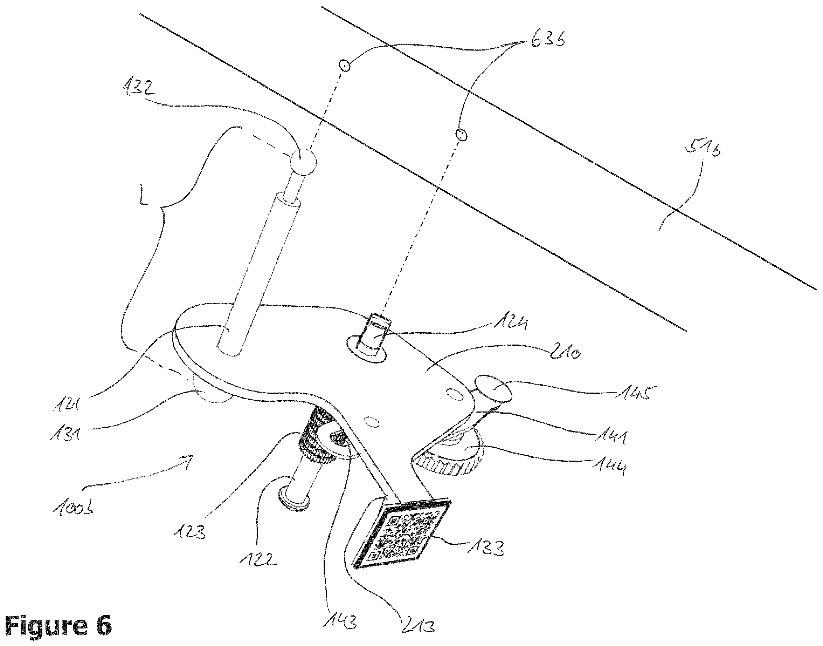

Figure 5 schematically illustrates another positioning device 100b, such as the positioning device 100b arranged on the right-hand side in Figure 1. The positioning device 100b can be used to position and fix another structural part 51b to the coupling 52. Figure 6 schematically illustrates a different perspective of the positioning device 100b of Figure 5 and relative to the structural part 51b. The positioning device 100b has several portions and components that are (at least functionally) identical to those of the positioning device 100a as explained with respect to Figures 3 and 4. These portions and components are not explained again, in order to avoid redundant disclosure, and have been referenced by the same numerals.

The positioning device 100b comprises a plate 210, which is formed smaller than that of positioning device 100a. For instance, the plate 210 can be formed and shaped with respect to constraints at the second structural part 51b and/or this side of the coupling 52. Nevertheless, a guiding pin 121 and an expandable pin 122 are part of the positioning device 100b offering the same functions as in Figures 3 and 4. Thus, the positioning device 100b can be mounted to the other structural part 51b by inserting the guiding pin 121 and the expandable pin 122 in corresponding fixation holes 63b in the other structural part 51b (see Figure 6).

Likewise, a clamp 141 is provided. The clamp 141 allows holding and fixing the coupling 52 to the other structural part 51b. Moreover, the positioning device 100b comprises a flange or protruding portion 213 carrying the identifier 133.

Thus, the flange or protruding portion 213 can faces a direction where a camera will capture an image of the first and second reflectors 131, 132, so that the identifier 133 is also visible for the camera.

It is to be understood that the other structural part 51b can likewise be coupled and fixed to the coupling 52 with a positioning device 100a as it is illustrated in Figures 3 and 4 but with a mirror-inverted setup.

In any case, when a camera 421, 422, 423 captures an image of the coupling 52 as well as both positioning devices 100a,b, the image includes four reflectors 131, 132 (two at each positioning device 100a,b) and two identifiers 133 (one at each positioning device 100a,b). Thus, a precise determination of the location and orientation of the two structural parts 51a,b and the coupling 52 is possible as six points in a three-dimensional space can be captured. As the pairs of fixation holes 63a,b and the location of the guidance faces 112, 113 are predefined, the location and orientation of the coupling 52 can be determined from the captured image.

Thus, the current location of the fastening device 400 (when capturing the image) can be set as a reference point or the fastening device 400 can be brought to a reference point after capturing the image. From there the fastening device 400 can move to each fastening position 71 automatically, i.e., without any readjustment or driving back to the reference point or the like. This allows mounting the fastening device 400 to a robot arm which is controlled based on the captured image information. Thus, a fast fastening of the structural parts 51a,b with the coupling 52 can be achieved and can be fully automated. The identifier 133 can further be employed to identify the type of coupling 52 or the pattern of the fastening positions 71, so that the fastening process can be automated, even in case of different patterns of fastening positions 71.

As a mere example, the camera(s) 421, 422, 423 can capture an image of the positioning devices 100 and determine the position of the structural parts 51, 52, 53 and the fastening positions 71, each time a fastener 72 is placed. Alternatively, the camera(s) 421, 422, 423 can capture an image of the positioning devices 100 once before the first fastener 72 is placed, and the position and orientation of the positioning devices 100, and hence the fastening positions 71, is only determined once as a reference point. All fasteners 72 are then placed based on this reference point automatically.

Turning to Figure 2 and the details of the positioning device 100c in Figures 7 and 8. Specifically, a crossbeam 53 is to be mounted to a frame 51, both forming structural parts according to the present disclosure. Since the crossbeam 53 is significantly larger (wider) then the structural parts 51 of Figure 1, the provision of a pair of reflectors on opposite sides may not be possible. Likewise, the area, where the fastening device 400 has to operate when fastening the crossbeam 53 to the frame 51 is much smaller, so that only smaller angles of view for a camera 421, 422, 423 are possible compared to the situation in Figure 1.

Thus, the crossbeam 53 is provided with a pair of fixation holes 63 in the same manner as described with respect to Figures 1 and 3 to 6. The positioning device 100c also comprises a guiding pin 321 and an expandable pin 122, which function as already described with respect to Figures 3 to 6. The only difference to guiding pin 321 compared to guiding pin 121 is that it includes only one reflector 131 on the second side of the plate 310 (visible in Figure 7). Actually, the first side of the plate 310 (visible in Figure 8) has only the guiding pin 321 and the expandable pin 122 protruding therefrom. Thus, Figure 8 only illustrates positions of reflectors 331, 332 (the reference numerals have been placed in parentheses).

The guiding pin 321 and the expandable pin 122 are used to mount the positioning device 100c to the crossbeam 53 by inserting the guiding pin 321 and the expandable pin 122 into the fixation holes 63 in the crossbeam 53 (Figure 2). Thus, the first side of the plate 310 abuts against a (upper) surface of the crossbeam 53.

The positioning device 100c comprises three reflectors in total, i.e. reflector 131 on guiding pin 121 as well as reflectors 331 and 332. When capturing an image of the positioning device 100c the three reflectors 131, 331 and 332 allow a first determination of a position and orientation of the positioning device 100c. In order to enhance the determination of the position and orientation of the positioning device 100c and, hence, the crossbeam 53 and likewise the intersection/overlap between crossbeam 53 and frame 51, two images can be captured by two cameras 422 and 423 arranged at different positions. As a mere example, the cameras 422, 423 can be arranged along a line at the fastening device 400. Such line may correspond to a longitudinal axis of the crossbeam 53 or may correspond to a cross-sectional axis of the crossbeam 53.

It is to be understood that two positioning devices 100c could be installed on the crossbeam, or one positioning device 100c is installed on the crossbeam and another positioning device 100 (not illustrated) is installed on the frame 51, in order to increase the number of reflectors to be captured by the cameras 421, 422, 423. However, a solution including only one positioning device 100c requires less fixation holes 63 in the structural parts 51, 53.

With reference to all positioning devices 100a,b,c it is to be noted that at least one reflector 131, 132, 331, 332 can have a different size than the other reflectors 131, 132, 331, 332. For instance, reflector 132 in Figures 3 to 6 is smaller (in diameter) than reflector 131. This allows, on the one hand, insertion of the guiding pin 121 into the associated fixation hole 63. On the other hand, it allows determination of the orientation of the positioning device 100a,b,c as the reflectors 131, 132 themselves can be determined by their size. In the exemplary positioning device 100c of Figures 7 and 8, reflector 331 is made smaller (in diameter) than the remaining reflectors 131 and 332.

It is further to be understood that in case of three reflectors or more, each of the reflectors 131, 132, 331, 332 can have a unique size and/or form, so that the reflectors 131, 132, 331, 332 can be differentiated from one another. This facilitates determination of the position and orientation of the respective positioning device 100a,b,c.

## Claims

1. A method for mounting two structural parts to one another, the method comprising:
providing a positioning device (100), which comprises:
a plate (110, 210, 310) forming a main body of the positioning device (100) having a first side and a second side opposite to the first side,
a guiding pin (121, 321) mounted to the plate (110, 210, 310) and extending perpendicularly from the first side of the plate (110, 210, 310),
an expandable pin (122) mounted to the plate (110, 210, 310), wherein an expandable portion (124) of the expandable pin (122) extends perpendicularly from the first side of the plate (110, 210, 310),
at least two reflectors (131, 132, 331, 332), and
an identifier (133, 333),
wherein the at least two reflectors (131, 132, 331, 332) and the identifier (133, 333) are not located on a common straight line;
providing a pair of fixation holes into a first structural part (51, 53); mounting the positioning device (100) to the first structural part (51, 53) by inserting the guiding pin (121, 321) into a first hole of the pair of fixation holes, inserting the expandable pin (122) into a second hole of the pair of fixation holes, and expanding the expandable portion (124) of the expandable pin (122);
positioning a second structural part relative to the first structural part;
capturing an image of the positioning device (100) including the at least two reflectors (131, 132, 331, 332) and the identifier (133, 333);
arranging a fastening device (400) relative to an intersection between the first and second structural parts based on a location of the at least two reflectors (131, 132, 331, 332) and the identifier (133, 333) captured in the image; and
fastening the first and second structural parts to one another by the fastening device (400).

2. The method according to claim 1, wherein capturing an image comprises capturing a first image of the positioning device (100) with a first camera (421) and a second image of the positioning device (100) with a second camera (422).

3. The method according to claim 1 or 2, wherein the positioning device further comprises:
a clamp (141) mounted to the second side of the plate (110, 210, 310).

4. The method according to claim 3, wherein the clamp (141) comprises a free end (145) extending over an edge of the plate (110, 210, 310).

5. The method according to claim 3 or 4, wherein the clamp (141) comprises a slot (143) configured to move the clamp (141) rotationally and linearly.

6. The method according to one of claims 3 to 5, wherein positioning the second structural part comprises clamping the second structural part to the first structural part using the clamp (141) of the positioning device (100).

7. The method according to one of claims 1 to 6, wherein the at least two reflectors (131, 132, 331, 332) of the positioning device (100) are all arranged on the second side of the plate (110, 210, 310).

8. The method according to one of claims 1 to 6, wherein a first reflector (132) of the at least two reflectors (131, 132, 331, 332) of the positioning device (100) is arranged at a free end of the guiding pin (121) arranged on the first side of the plate (110, 210, 310), and a second reflector (131) of the remaining reflectors (131, 331, 332) of the at least two reflectors (131, 132, 331, 332) are arranged on the second side of the plate (110, 210, 310).

9. The method according to claim 8, wherein mounting the positioning device (100) comprises inserting the guiding pin (121) through the first hole of the pair of fixation holes to such an extent that the first reflector (131) and the second reflector (132) each extend over a side surface of the first and second structural parts.

10. The method according to one of claims 1 to 9, wherein fastening the first and second structural parts comprises placing a plurality of self-piercing fasteners through the first and second structural parts.

11. The method according to one of claims 1 to 10, wherein the positioning device (100) further comprises:
at least one guidance face (111, 112, 113) protruding from the plate (110, 210, 310).

12. The method according to one of claims 1 to 11, wherein the identifier (133, 333) of the positioning device (100) includes a machine-readable code and/or a reflecting portion.

## Patentansprüche

1. Verfahren zum Aneinanderbefestigen von zwei Strukturteilen, wobei das Verfahren umfasst:
Bereitstellen einer Positioniervorrichtung (100), welche umfasst:
eine Platte (110, 210, 310), die einen Hauptkörper der Positioniervorrichtung (100) bildet und die eine erste Seite und eine zweite, der ersten Seite gegenüberliegende Seite aufweist,
einen Führungsstift (121, 321), der an der Platte (110, 210, 310) montiert ist und sich senkrecht von der ersten Seite der Platte (110, 210, 310) erstreckt,
einen ausdehnbaren Stift (122), der an der Platte (110, 210, 310) montiert ist,
wobei sich ein ausdehnbarer Abschnitt (124) des ausdehnbaren Stifts (122) senkrecht von der ersten Seite der Platte (110, 210, 310) erstreckt, mindestens zwei Reflektoren (131, 132, 331, 332), und
eine Kennzeichnung (133, 333), wobei die mindestens zwei Reflektoren (131, 132, 331, 332) und die Kennzeichnung (133, 333) nicht auf einer gemeinsamen geraden Linie angeordnet sind;
Bereitstellen eines Paares von Befestigungslöchern in einem ersten Strukturteil (51, 53);
Montieren der Positioniervorrichtung (100) an dem ersten Strukturteil (51, 53) durch Einführen des Führungsstifts (121, 321) in ein erstes Loch des Paares von Befestigungslöchern, Einführen des ausdehnbaren Stifts (122) in ein zweites Loch des Paares von Befestigungslöchern, und Ausdehnen des ausdehnbaren Abschnitts (124) des ausdehnbaren Stifts (122);
Positionieren eines zweiten Strukturteils relativ zu dem ersten Strukturteil;
Aufnehmen eines Bildes der Positioniervorrichtung (100) einschließlich der mindestens zwei Reflektoren (131, 132, 331, 332) und der Kennzeichnung (133, 333);
Anordnen einer Befestigungsvorrichtung (400) relativ zu einem Schnittpunkt zwischen dem ersten und zweiten Strukturteil basierend auf einer Position der mindestens zwei Reflektoren (131, 132, 331, 332) und der Kennzeichnung (133, 333), die in dem Bild erfasst wurden; und
Befestigen des ersten und zweiten Strukturteils aneinander durch die Befestigungsvorrichtung (400).

2. Verfahren nach Anspruch 1, wobei das Aufnehmen eines Bildes das Aufnehmen eines ersten Bildes der Positioniervorrichtung (100) mit einer ersten Kamera (421) und eines zweiten Bildes der Positioniervorrichtung (100) mit einer zweiten Kamera (422) umfasst.

3. Verfahren nach Anspruch 1 oder 2, wobei die Positioniervorrichtung ferner umfasst: eine Klammer (141), die an der zweiten Seite der Platte (110, 210, 310) montiert ist.

4. Verfahren nach Anspruch 3, wobei die Klammer (141) ein freies Ende (145) umfasst, das sich über einen Rand der Platte (110, 210, 310) erstreckt.

5. Verfahren nach Anspruch 3 oder 4, wobei die Klammer (141) einen Schlitz (143) umfasst, der konfiguriert ist, um die Klammer (141) rotatorisch und linear zu bewegen.

6. Verfahren nach einem der Ansprüche 3 bis 5, wobei das Positionieren des zweiten Strukturteils das Klemmen des zweiten Strukturteils an dem ersten Strukturteil unter Verwendung der Klammer (141) der Positioniervorrichtung (100) umfasst.

7. Verfahren nach einem der Ansprüche 1 bis 6, wobei die mindestens zwei Reflektoren (131, 132, 331, 332) der Positioniervorrichtung (100) alle auf der zweiten Seite der Platte (110, 210, 310) angeordnet sind.

8. Verfahren nach einem der Ansprüche 1 bis 6, wobei ein erster Reflektor (132) der mindestens zwei Reflektoren (131, 132, 331, 332) der Positioniervorrichtung (100) an einem freien Ende des Führungsstifts (121) angeordnet ist, der an der ersten Seite der Platte (110, 210, 310) angeordnet ist, und ein zweiter Reflektor (131) der verbleibenden Reflektoren (131, 331, 332) der mindestens zwei Reflektoren (131, 132, 331, 332) auf der zweiten Seite der Platte (110, 210, 310) angeordnet sind.

9. Verfahren nach Anspruch 8, wobei das Montieren der Positioniervorrichtung (100) das Einführen des Führungsstifts (121) durch das erste Loch des Paares von Befestigungslöchern in einem solchen Ausmaß umfasst, dass sich der erste Reflektor (131) und der zweite Reflektor (132) jeweils über eine Seitenfläche des ersten und zweiten Strukturteils erstrecken.

10. Verfahren nach einem der Ansprüche 1 bis 9, wobei das Befestigen des ersten und zweiten Strukturteils das Anbringen einer Vielzahl von selbststanzenden Befestigungselementen durch das erste und zweite Strukturteil umfasst.

11. Verfahren nach einem der Ansprüche 1 bis 10, wobei die Positioniervorrichtung (100) ferner umfasst: mindestens eine Führungsfläche (111, 112, 113), die von der Platte (110, 210, 310) hervorsteht.

12. Verfahren nach einem der Ansprüche 1 bis 11, wobei die Kennzeichnung (133, 333) der Positioniervorrichtung (100) einen maschinenlesbaren Code und/oder einen reflektierenden Abschnitt aufweist.

## Revendications

1. Procédé de montage de deux pièces structurelles l'une sur l'autre, le procédé comprenant les étapes consistant à:
fournir un dispositif de positionnement (100), lequel comprend:
une plaque (110, 210, 310) formant un corps principal du dispositif de positionnement (100) ayant un premier côté et un second côté opposé au premier côté,
une broche de guidage (121, 321) montée sur la plaque (110, 210, 310) et s'étendant perpendiculairement depuis le premier côté de la plaque (110, 210, 310),
une broche extensible (122) montée sur la plaque (110, 210, 310), dans lequel une partie extensible (124) de la broche extensible (122) s'étend perpendiculairement depuis le premier côté de la plaque (110, 210, 310), au moins deux réflecteurs (131, 132, 331, 332), et
un identifiant (133, 333), dans lequel les au moins deux réflecteurs (131, 132, 331, 332) et l'identifiant (133, 333) ne sont pas situés sur une ligne droite commune;
fournir une paire de trous de fixation dans une première pièce structurelle (51, 53);
monter le dispositif de positionnement (100) sur la première pièce structurelle (51, 53) en insérant la broche de guidage (121, 321) dans un premier trou de la paire de trous de fixation, en insérant la broche extensible (122) dans un second trou de la paire de trous de fixation, et en étendant la partie extensible (124) de la broche extensible (122);
positionner une seconde pièce structurelle par rapport à la première pièce structurelle;
capturer une image du dispositif de positionnement (100) incluant les au moins deux réflecteurs (131, 132, 331, 332) et l'identifiant (133, 333);
agencer un dispositif de fixation (400) par rapport à une intersection entre les première et seconde pièces structurelles basé sur un emplacement des au moins deux réflecteurs (131, 132, 331, 332) et de l'identifiant (133, 333) capturés dans l'image; et
fixer les première et seconde pièces structurelles l'une à l'autre par le dispositif de fixation (400).

2. Le procédé selon la revendication 1, dans lequel la capture d'une image comprend la capture d'une première image du dispositif de positionnement (100) avec une première caméra (421) et d'une seconde image du dispositif de positionnement (100) avec une seconde caméra (422).

3. Le procédé selon la revendication 1 ou 2, dans lequel le dispositif de positionnement comprend en outre: une pince (141) montée sur le second côté de la plaque (110, 210, 310).

4. Le procédé selon la revendication 3, dans lequel la pince (141) comprend une extrémité libre (145) s'étendant sur un bord de la plaque (110, 210, 310).

5. Le procédé selon la revendication 3 ou 4, dans lequel la pince (141) comprend une fente (143) configurée pour déplacer la pince (141) en rotation et linéairement.

6. Le procédé selon l'une des revendications 3 à 5, dans lequel le positionnement de la seconde pièce structurelle comprend le serrage de la seconde pièce structurelle à la première pièce structurelle en utilisant la pince (141) du dispositif de positionnement (100).

7. Le procédé selon l'une des revendications 1 à 6, dans lequel les au moins deux réflecteurs (131, 132, 331, 332) du dispositif de positionnement (100) sont tous agencés sur le second côté de la plaque (110, 210, 310).

8. Le procédé selon l'une des revendications 1 à 6, dans lequel un premier réflecteur (132) des au moins deux réflecteurs (131, 132, 331, 332) du dispositif de positionnement (100) est agencé à une extrémité libre de la broche de guidage (121) agencée sur le premier côté de la plaque (110, 210, 310), et un second réflecteur (131) des réflecteurs restants (131, 331, 332) des au moins deux réflecteurs (131, 132, 331, 332) sont agencés sur le second côté de la plaque (110, 210, 310).

9. Le procédé selon la revendication 8, dans lequel le montage du dispositif de positionnement (100) comprend l'insertion de la broche de guidage (121) à travers le premier trou de la paire de trous de fixation dans une mesure telle que le premier réflecteur (131) et le second réflecteur (132) s'étendent chacun sur une surface latérale des première et seconde pièces structurelles.

10. Le procédé selon l'une des revendications 1 à 9, dans lequel la fixation des première et seconde pièces structurelles comprend la mise en place d'une pluralité de fixations auto-perforantes à travers les première et seconde pièces structurelles.

11. Le procédé selon l'une des revendications 1 à 10, dans lequel le dispositif de positionnement (100) comprend en outre: au moins une face de guidage (111, 112, 113) faisant saillie de la plaque (110, 210, 310).

12. Le procédé selon l'une des revendications 1 à 11, dans lequel l'identifiant (133, 333) du dispositif de positionnement (100) comprend un code lisible par machine et/ou une partie réfléchissante.
